# EUROPÄISCHE PATENTSCHRIFT

(11) **EP 3 663 593 B1**
(45) Veröffentlichungstag und Bekanntmachung des Hinweises auf die Patenterteilung: **17.07.2024**
(21) Anmeldenummer: 19000540.5
(22) Anmeldetag: 02.12.2019
(51) Int. Cl.: F16B 7/04, E04B 1/58, F16B 7/18, F16B 9/00

(54) **BAUGRUPPE, WELCHE AUS EINEM HOHLPROFIL UND EINER STIRNSEITIG DARAN VERANKERTEN VERBINDUNGSBAUGRUPPE BESTEHT**
ASSEMBLY CONSISTING OF A HOLLOW PROFILE AND A CONNECTING ASSEMBLY ANCHORED TO THE FRONT
MODULE COMPRENANT UN PROFILÉ CREUX ET UN MODULE DE RACCORDEMENT ANCRÉ SUR SON CÔTÉ AVANT

(30) Priorität: 03.12.2018 AT 3652018
(43) Veröffentlichungstag der Anmeldung: 10.06.2020
(73) Patentinhaber: Bürscher, Franz, 3343 Hollenstein an der Ybbs (AT)
(72) Erfinder: Bürscher, Franz, 3343 Hollenstein an der Ybbs (AT)

(56) Entgegenhaltungen:
- GB-A- 1 160 389
- IT-A1- PD20 120 231

## Beschreibung

Die Erfindung betrifft eine Baugruppe, welche aus einem Hohlprofil und einer stirnseitig daran verankerten Verbindungsbaugruppe besteht.

Beispielsweise die Schriften DE 4210488 A1, DE 6945755 U, DE 102004053758 A1, DE 102006041211 A1 und AT 351738 B zeigen ein Hohlprofil mit einer an der Stirnseite verankerten Verbindungsbaugruppe. Die Verbindung zwischen dem Hohlprofil und der Verbindungsbaugruppe basiert auf dem Prinzip des Spreizens zwischen Keil- oder Kegelflächen, wobei ein oder mehrere Teile an die Innenmantelfläche des Hohlprofils angedrückt werden. Typischerweise dient die Verbindungsbaugruppe dazu, ein weiteres Hohlprofil am erstgenannten Hohlprofil zu verankern, sodass beispielsweise eine T-Verbindung zwischen zwei Hohlprofilen gebildet wird. Vorteilhaft an den Verbindungsbauweisen mittels Spreizkeil bzw. Spreizkegel ist, dass für das Vorbereiten der Verbindung am Hohlprofil selbst keinerlei Bearbeitungsschritte - wie beispielsweise Bohren, Gewindeschneiden, Fräsen, Schweißen etc. - erforderlich sind und dass von der Außenmantelfläche des Hohlprofils kein Teil radial vorzustehen braucht. Nachteilig an derartigen Verbindungen ist, dass der Herstellungsaufwand für die Verbindungsbaugruppe relativ hoch ist, insbesondere dann, wenn die herzustellende Stückzahl zu niedrig ist, um Serienfertigungswerkzeuge wie Schmiedegesenke oder Gießformen zu rechtfertigen.

Die IT PD20120231 A1 beschreibt eine an einem Stirnende eines Hohlprofils verankerbare Baugruppe, welche eine stirnseitig am Hohlprofil anliegende Abdeckplatte, eine Schraube, eine Mutter und mehrere jeweils ebene Klemmteile umfasst. Bestimmungsgemäß sind die Klemmteile an der Innenmantelfläche des Hohlprofils durch Verkannten zu fixieren, indem sie in einem spitzen Winkel zur Querschnittsebene des Hohlprofils ausgerichtet sind, dabei an gegenüberliegenden Stellen an der Innenmantelfläche des Hohlprofils anliegen und durch die Schraube derart auf sie Zugkraft ausgeübt wird, dass sie bei Abwesenheit anderer Kräfte parallel zur Querschnittsfläche des Hohlprofils ausgerichtet werden würden. Vor dem Fixieren am Hohlprofil sind die Einzelteile der Verbindungsbaugruppe zueinander derart beweglich, dass sie schwierig zu montieren sind. Das Demontieren der Verbindungsbaugruppe vom Hohlprofil ist nur dann möglich, wenn die Klemmteile vorher kaum verkantet wurden. Eine andere Baugruppe wird in GB 1160389 A gezeigt.

Die der Erfindung zu Grunde liegende Aufgabe besteht darin, eine Verbindungsbaugruppe für das Verankern am Stirnbereich eines Hohlprofils bereitzustellen, wobei die Verbindungsbaugruppe nicht die Außenmantelfläche des Hohlprofils zu berühren braucht, und wobei es nicht erforderlich ist, das Hohlprofil für das Verankern der Verbindungsbaugruppe zu bearbeiten. Gegenüber den Bauweisen entsprechend den oben erwähnten Schriften soll der Herstellungsaufwand für die Verbindungsbaugruppe niedriger gehalten werden können und die Handhabbarkeit verbessert werden.

Zum Lösen der Aufgabe wird eine Baugruppe gemäß Anspruch 1 benutzt und wird von den bekannten Bauweisen ausgegangen, bei welchen die Verbindungsbaugruppe einen stirnseitig am Hohlprofil anliegenden Teil aufweist, sowie einen an der Innenmantelfläche des Hohlprofils anliegenden Teil, sowie einen Verbindungsteil, welcher zwischen den beiden zuvor genannten Teilen eine auf den jeweils anderen der beiden Teile hin ausgerichtete Zugkraft ausübt.

Als erfindungsgemäße Weiterentwicklung dazu wird vorgeschlagen, dass der an der Innenmantelfläche des Hohlprofils anliegende Teil mit der Innenmantelfläche des Hohlprofils gegen Bewegung in Längsrichtung des Hohlprofils verkantet ist.

Durch diese Bauweise ist komfortable und robuste Funktion erreichbar und es ist einfach ausschließlich mit sehr einfach herstellbaren Einzelteilen das Auslangen zu finden, womit die Bauweise sehr kostengünstig ist.

Die Erfindung wird an Hand von zwei Ausführungsbeispielen, die durch Zeichnungen veranschaulicht sind, näher erläutert.
- Fig. 1:: zeigt eine erste nicht erfindungsgemäße Baugruppe in Teilschnittansicht, wobei die Schnittebene parallel zur Profilrichtung des Hohlprofils liegt.
- Fig. 2:: zeigt die Baugruppe von Fig. 1 in der in Fig. mit "AA" angedeuteten Schnittdarstellung.
- Fig. 3:: zeigt zwei Teile der Baugruppe von Fig. 1 in der in Fig. 1 mit "BB" angedeuteten Schnittdarstellung.
- Fig. 4:: zeigt eine zweite erfindungsgemäße Baugruppe in Teilschnittansicht, wobei die Schnittebene parallel zur Profilrichtung des Hohlprofils liegt.
- Fig. 5:: zeigt die Baugruppe von Fig. 4 in der in Fig. mit "CC" angedeuteten Schnittdarstellung.
- Fig. 6:: zeigt zwei Teile der Baugruppe von Fig. 1 in der in Fig. 1 mit "DD" angedeuteten Schnittdarstellung.

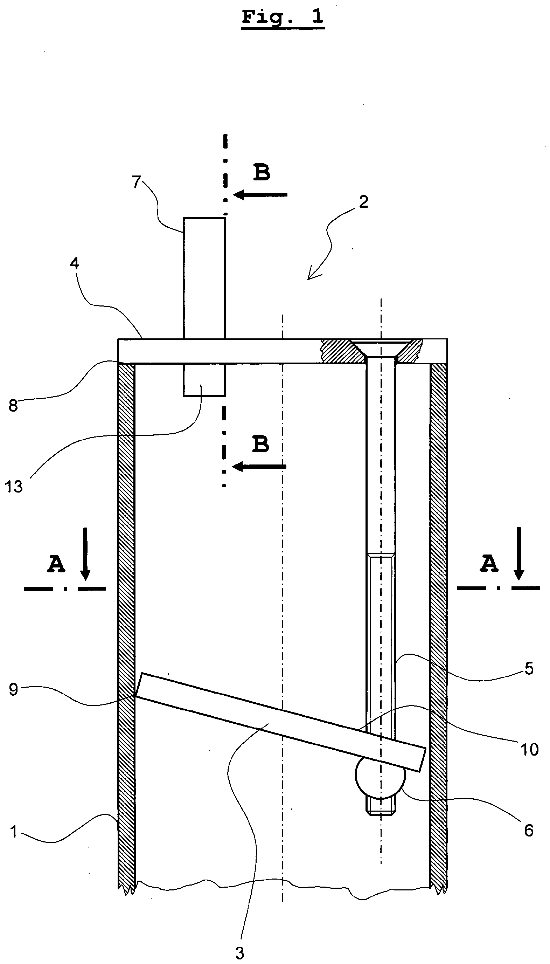

Die Baugruppe von Fig. 1 besteht aus einem Hohlprofil 1 und einer Verbindungsbaugruppe 2, welche wiederum aus einem Klemmteil 3, einem Deckelteil 4, einer Schraube 5, einer Gewindemutter 6 und einer Anschlusslasche 7 besteht.

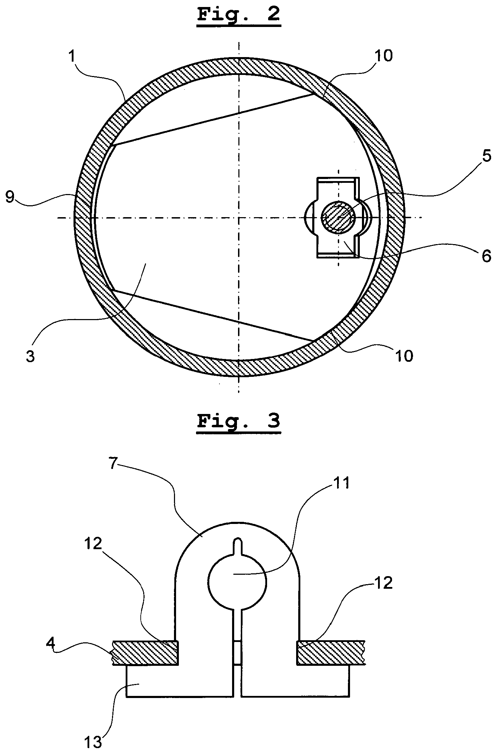

Der Deckelteil 4 liegt von außen her an der Stirnfläche 8 des Hohlprofils 1 an. Der Klemmteil 3 befindet sich im Inneren des Hohlprofils 1 und liegt mit Berührungsbereichen 9, 10 an der Innenmantelfläche des Hohlprofils 1 an. Die Berührungsbereiche 9, 10 liegen bezüglich der Längsrichtung des Hohlprofils 1 zueinander versetzt. Der Berührungsbereich 9 liegt näher an der Stirnfläche 8 des Hohlprofils 1 als die beiden Berührungsbereiche 10, welche zueinander zur Stirnfläche 8 auf gleichem Abstand liegen. In Fig. 2 ist gut erkennbar, dass zumindest bezüglich einer zur Querschnittsebene des Hohlprofils 1 parallel liegenden Richtungskoordinate die Berührungsbereiche 10 einerseits und der Berührungsbereich 9 andererseits den Klemmteil 3 von gegenüberliegenden Seiten her zwischen sich einschließen. Die Achse der Schraube 5, welche mit ihrem Kopf von der vom Hohlprofil 1 abgewandten Seite her am Deckelteil 4 anliegt und mit der Gewindemutter 6, welche an der vom Deckelteil 4 abgewandten Seite des Klemmteils 3 anliegt, liegt näher an der Verbindungslinie zwischen den beiden Berührungsbereichen 10, welche von der Stirnfläche 8 weiter beabstandet sind, als der Berührungsbereich 9. Durch diese geometrischen Gegebenheiten - Lage der Berührungsbereiche 9, 10 bezüglich Hohlprofil 1 und Achse der Schraube 5 - neigt der Klemmteil 3 zum Verkanten an der der Innenmantelfläche des Hohlprofils 1, wenn die Schraube 5 angezogen wird, also eine Zugkraft auf den Klemmteil 3 ausübt, welche zur Stirnfläche 8 des Hohlprofils 1 hin ausgerichtet ist.

Die Neigung zum Verkanten ist dann besonders stark, wenn der Winkel zwischen der Querschnittsebene des Hohlprofils 1 und der durch die Berührungsbereiche 9, 10 des Klemmteils 3 aufgespannten Ebene kleiner ist als der Reibungswinkel zwischen den Materialien des Klemmteils 3 und des Hohlprofils 1.

(Der Reibungswinkel in diesem Sinne ist jener Winkel, den eine schiefe Ebene bezüglich der Horizontalen einnimmt, wenn ein auf ihr liegender Körper gerade eben in Bewegung kommt.)

Die Neigung zum Verkannten kann verstärkt werden, wenn die Verbindungsbaugruppe mit einer vorgespannten elastischen Feder ausgestattet wird, welche dahingehend auf den Klemmteil 3 einwirkt, dass dieser bei Abwesenheit anderer Einwirkungen gegenüber dem Hohlprofil 1 so gedreht wird, dass die durch die Berührungsbereiche 9, 10 des Klemmteils 3 aufgespannten Ebene in die Parallele zur Querschnittsebene des Hohlprofils 1 geschwenkt wird.

Zur Montage der Verbindungsbaugruppe 2 am Hohlprofil 1 braucht nur die Verbindungsbaugruppe 2 mit der Gewindemutter 6 und dem Klemmteil 3 voran von der Stirnfläche 8 her in das Hohlprofil 1 eingeschoben zu werden, bis der Deckelteil 4 an der Stirnfläche 8 anliegt, und dann die Schraube 5 angezogen zu werden.

Um an der Verbindungsbaugruppe 2 weitere Teile (nicht dargestellt) befestigen zu können, dient in diesem Beispiel die Anschlusslasche 7. Ihre beispielhafte Form und die vorteilhafte Befestigungsweise am Deckelteil 4 sind in Fig. 3 gut erkennbar. Die Anschlusslasche 7 hat etwa die Form einer U-förmigen Klammer, welche eine Durchgangsöffnung 11 umringt und deren freie Schenkelenden zu Fortsätzen 13 nach außen geknickt sind. Sie ist durch eine Ausnehmung im Deckelteil 3 hindurchgesteckt und mit zwei Vertiefungen 12, die sich jeweils an der Außenseite der beiden Schenkel befinden, an einander gegenüberliegenden Randbereichen der Ausnehmung am Deckelteil 4 eingerastet. Zur Montage der Anschlusslasche 7 am Deckelteil 4 werden die beiden Schenkel der Anschlusslasche 7 unter elastischer Verformung ihres Verbindungsbereiches etwas aufeinander zu gedrückt und mit dem besagten Verbindungsbereich voran durch die erwähnte Ausnehmung im Deckelteil 4 eingeschoben.

Idealerweise ist die Länge der Fortsätze 13 so bemessen, dass sie bei am Hohlprofil 1 montiertem Deckelteil 4 an der Innenmantelfläche des Hohlprofils 1 anliegen. Damit kann der Deckelteil 4 bei der Montage gegenüber dem Hohlprofil 1 gut in eine definierte Lage gerückt und dort fixiert werden.

Deckelteil 4, Klemmteil 3 und Anschlusslasche 5 der Verbindungsbaugruppe können sehr gut als ebene Laserschnittteile aus Stahlblech hergestellt werden. Bis auf ggf. erwünschtes Ansenken einer Schraubendurchgangsbohrung und ggf. erwünschte Oberflächenveredelung sind nach dem Laserschnitt keine weiteren Schritte zur Herstellung dieser Teile erforderlich. Damit sind diese Teile auch in Kleinserien sehr kostengünstig bereitstellbar; auch die Montage der Teile aneinander ist einfach und damit kostengünstig. Die restlichen Teile der Verbindungsbaugruppe 2 sind die Schraube 5 und die Gewindemutter 6; diese Teile sind sehr kostengünstig zukaufbare Massenfertigungsteile.

Da sich der Klemmteil 3 beim Anziehen der Schraube 5 gegenüber der Schraube verschwenkt, ist es vorteilhaft, als Gewindemutter 6 - wie dargestellt - eine Quergewindemutter zu verwenden. (Eine Quergewindemutter hat die äußere Form eines Kreiszylinders, wobei die Richtung der Gewindebohrung normal zur Achse des Kreiszylinders ausgerichtet ist.)

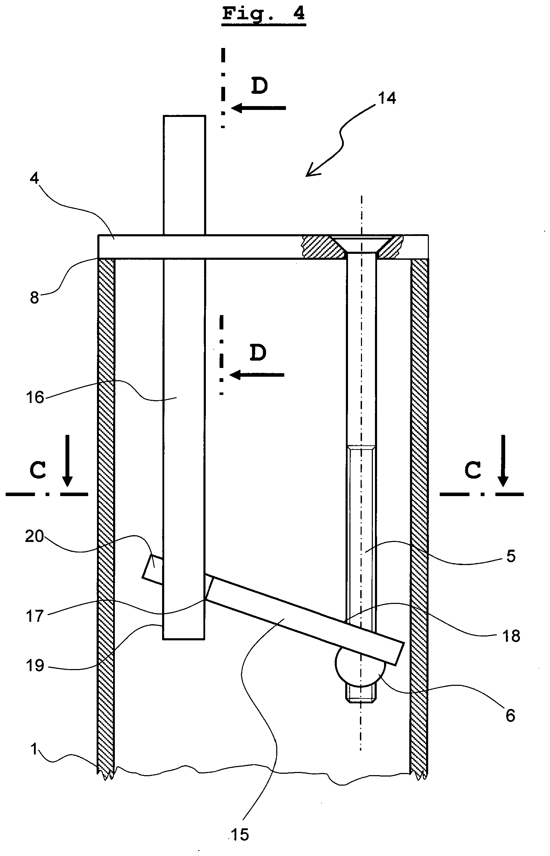

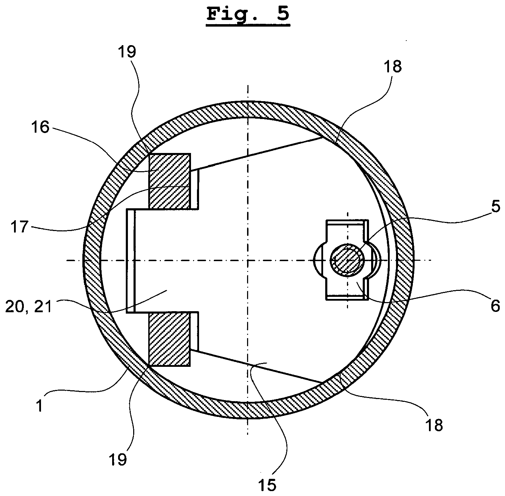

Bei der erfindungsgemäßen Bauweise gemäß Fig. 4 bis Fig. 6 der Verbindungsbaugruppe 14 verkantet der Klemmteil 15 nicht nur unmittelbar am Hohlprofil 1 (wie bei der Bauweise gemäß Fig. 1 bis Fig. 3), sondern einerseits am Hohlprofil 1 und andererseits an der Anschlusslasche 16. Die an der Anschlusslasche 16 liegenden Berührungsbereiche 17 liegen näher an der Stirnfläche 8 des Hohlprofils 1 als die an der Innenmantelfläche des Hohlprofils 1 liegenden Berührungsbereiche 18, welche näher an der Achse der Schraube 5 liegen als die Berührungsbereiche 17. Durch das Verkanten des Klemmteils 15, welches im Prinzip genau gleich erfolgt wie das weiter oben beschriebene Verkanten des Klemmteils 3 der Verbindungsbaugruppe 2, wird die Anschlusslasche 16 mit Berührungsbereichen 19 (Fig. 5) stark gegen die Innenmantelfläche des Hohlprofils 1 angedrückt, womit die gesamte Verbindungsbaugruppe 14 am Hohlprofil 1 gehalten wird.

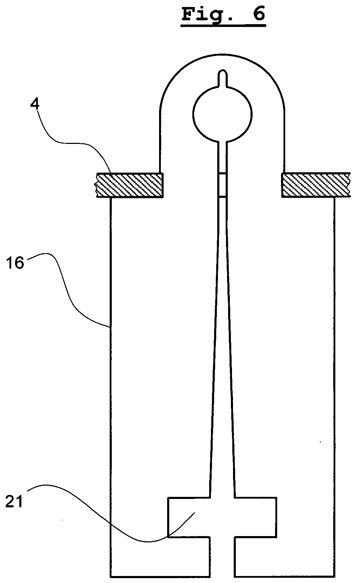

Der Klemmteil 15 kann an der Anschlusslasche 16 vormontiert werden, indem er mit einer Zunge 20 (Fig. 5) in eine Erweiterung 21 (Fig. 6) zwischen den Schenkeln der Anschlusslasche 16 eingesteckt wird. Idealerweise sind die Zunge 20 und die Erweiterung 21 so bemessen, dass die Zunge 20 zwischen den Schenkeln der Anschlusslasche 16 schon durch Reibung spielfrei aber doch noch bewegbar gehalten wird.

Die Bauweise gemäß Fig. 4 bis Fig. 6 ist geringfügig materialaufwändiger aber deutlich handlicher zu montieren und zu demontieren als die Bauweise gemäß Fig. 1 bis Fig. 3.

## Patentansprüche

1. Baugruppe, welche aus einem Hohlprofil (1) und einer stirnseitig daran verankerten Verbindungsbaugruppe (14) besteht, wobei die Verbindungsbaugruppe (14) einen stirnseitig am Hohlprofil (8) anliegenden Deckelteil (4) aufweist, sowie einen an der Innenmantelfläche des Hohlprofils (1) anliegenden Klemmteil (15), sowie eine Schraube (5), welche zwischen Klemmteil (15) und Deckelteil (4) eine jeweils auf den anderen Teil hin ausgerichtete Zugkraft ausübt, wobei der Klemmteil (15) mit der Innenmantelfläche des Hohlprofils (1) gegen Bewegung in Längsrichtung des Hohlprofils (1) verkantet ist,
**dadurch gekennzeichnet, dass**
die Verbindungsbaugruppe (14) eine Anschlusslasche (16) aufweist, welche die Gestalt einer U-förmigen Klammer aufweist, welche zwei Schenkel und einen diese verbindenden Verbindungsbereich umfasst, und eine Durchgangsöffnung (11) umringt, wobei die Anschlusslasche (16) durch eine Ausnehmung im Deckelteil (4) hindurchgesteckt ist, wobei der Klemmteil (15) eine Zunge (20) aufweist, welche in einer Erweiterung (21) zwischen den Schenkeln der Anschlusslasche (16) eingesteckt ist, wobei die Anschlusslasche (16) an der Innenmantelfläche des Hohlprofils (1) anliegt, und wobei der Klemmteil (15) einerseits am Hohlprofil (1) und andererseits an der Anschlusslasche (16) verkanntet ist.

2. Baugruppe nach Anspruch 1, **dadurch gekennzeichnet, dass** die Zunge (20) in der Erweiterung (21) spielfrei aber doch noch bewegbar gehalten ist.

## Claims

1. Assembly consisting of a hollow profile (1) and a connector assembly (14) anchored to the end face, wherein the connector assembly (14) has a cover part (4) adjoining the end face of the hollow profile (8) and a clamping part (15) adjoining the inner face of the hollow profile (1), and a screw (5) which exerts a tensile force between the clamping part (15) and the cover part (4), which is directed towards the other part in each case, wherein the clamping part (15) is angled with the inner face of the hollow profile (1) against movement in the longitudinal direction of the hollow profile (1),
**characterised in that**
the connector assembly (14) has a connection lug (16) with a U-like clamp shape, which consists of two legs and a connecting portion connecting them together, and encircles a through-hole (11), wherein the connection lug (16) is inserted through a recess in the cover part (4), wherein the clamping part (15) has a tongue (20) which is inserted into an extension (21) between the legs of the connection lug (16), wherein the connection lug (16) adjoins the inner face of the hollow profile (1), and wherein the clamping part (15) is firstly angled to the hollow profile (1) and then to the connection lug (16).

2. Assembly according to claim 1, **characterised by** the fact that tongue (20) in the extension (21) is gap-free but still kept movable.

## Revendications

1. Assemblage se composant d'un profil creux (1) sur la face avant duquel est ancré un ensemble de liaison (14), l'ensemble de liaison (14) présentant une partie formant couvercle (4) placée contre le profil creux (8) sur la face avant, ainsi qu'une pièce de serrage (15) placée contre la paroi interne du profil creux (1), ainsi qu'une vis (5) qui exerce entre la pièce de serrage (15) et la partie formant couvercle (4) une force de traction appliquée respectivement sur l'autre partie, la pièce de serrage (15) étant bloquée avec la paroi interne du profil creux (1) contre le mouvement dans le sens longitudinal du profil creux (1),
**caractérisé en ce que**
l'élément de liaison (14) est doté d'une attache (16) laquelle présente la forme d'un cavalier en forme de U, lequel comprend deux branches raccordées à une zone de liaison, et entoure un orifice de passage (11), l'attache (16) traversant une cavité dans la partie formant couvercle (4), la pièce de serrage (15) présentant une languette (20) laquelle est enfichée dans un élargissement (21) placé entre les branches de l'attache (16), l'attache (16) reposant contre la paroi interne du profil creux (1), et la pièce de serrage (15) étant bloquée d'une part contre le profil creux (1) et d'autre part contre l'attache (16).

2. Assemblage selon la revendication 1, **caractérisé en ce que** la languette (20) dans l'élargissement (21) est maintenue sans jeu, mais est cependant encore mobile.
